Europäisches Patentamt

European Patent Office

Office européen des brevets

(19)

(11) Publication number: **0 105 850**
**A2**

# EUROPEAN PATENT APPLICATION

(12)

(21) Application number: 83850239.1

(22) Date of filing: 07.09.83

(51) Int. Cl.³: **H 02 J 7/10**

(30) Priority: 08.09.82 SE 8205114

(43) Date of publication of application:
18.04.84 Bulletin 84/16

(84) Designated Contracting States:
AT BE CH DE FR GB IT LI NL

(71) Applicant: Laddelektronik Tonima AB
Box 477
S-126 04 Hägersten(SE)

(72) Inventor: Fahlman, Tomas
Tellusborgsvägen 45 B
S-126 33 Hägersten(SE)

(74) Representative: Modin, Jan et al,
c/o Axel Ehrners Patentbyra AB Box 5342
S-102 46 Stockholm(SE)

(54) Battery charger.

(57) Battery charger with a transformer (TR) having two windings (S1, S2) on the secondary side. Each winding is connected on the one hand to a positive battery pole terminal (B1), and on the other hand to a negative battery pole terminal (B2) via thyristor (TY1 and TY2, respectively) serving as a rectifier and current valve. The thyristor (TY1, TY2) operate in response to the pole terminal voltage of a connected battery (B) for automatic switching between quick charging with a high current valve, e.g. 10A, wherein both the thyristors are triggered, and normal charging with a low current valve, e.g. 5A, wherein only one of the thyristors (TY1) is triggered.

EP 0 105 850 A2

./...

Fig.1

## BATTERY CHARGER

The invention relates to a battery charger with feed terminals for feeding from an alternating voltage source, e.g. an a.c. network or an a.c. generator, namely a first feed terminal connected to a positive battery pole terminal and at least two second feed terminals, each one of which being connected to a transformer winding and, via a thyristor serving as a rectifier and a current valve, to a negative battery pole terminal, the control gate of each thyristor being connected to a control circuit inserted between the battery pole terminals for controlling the charging process in response to the pole terminal voltage of a connected battery.

Such a battery charger is previously known from the US Patent Specification No. 3 857 082 (the embodiment according to Fig. 4). It is hereby an advantage to have the anodes of the thyristors connected to the negative battery pole terminal, as the control voltage for the thyristors can be derived directly from the battery voltage without insertion of e.g. an oscillator or a trigger circuit. As is known, oscillators can produce high frequency disturbances and are thus not suitable.

Previously known, automatically operating battery chargers are normally designed in such a way that, during charging of a connected battery, they produce an essentially constant charging current, which is shut off when the pole terminal voltage of the battery reaches a predetermined value corresponding to a substantially completely charged battery. Many battery chargers are furthermore provided with manually operated switching means for bypassing the automatically operating devices, whereby a higher charging current is obtained.

The background of the present invention is a desire to automatically adapt the charging current to the charging state of the battery during the charging process, in order not to deviate

too much from the ideal charging current curve existing for any given battery.

The main object of the invention is thus to achieve a device for a battery charger of the previously mentioned kind, which device enables an automatic switching of the charging current during the charging process. Furthermore, the device should provide additional protective functions, such as protection against overloading, overheating, excess charging (to too high a voltage), short-circuiting, a defect battery, a non-connected battery and an erroneously pole-connected battery.

According to the invention, the main object is achieved for a battery charger having the features stated in claim 1. Further suitable features appear from the sub-claims.

By keeping a varying number of thyristors conductive, in response to the pole terminal voltage of the connected battery, the charging current can be adjusted simply and effectively to the existing conditions. When switching, one can, in principel, change from one conducting sub-circuit producing a certain current value, to one or more other sub-circuits producing a different current value. The switching can also involve a change in the number of conductive sub-circuits, i.e. an increase or decrease of the number of conductive thyristors. For example, it may be advantageous,when charging a sulphated battery, initially when the battery pole terminal voltage is very low, to keep the current value very low during a long period of time which is necessary for the recovery of the battery, and thereafter substantially higher in order to achieve the desired charging and, in the final stage when the battery is almost completly charged, once again lower to prevent gasing. Finally, the current is to be completely shut off when a maximum battery pole terminal voltage or charging is reached.

3

In an especially simple embodiment, only two thyristors are used, wherein quick charging is achieved by connecting both of the thyristors, when the connected battery has not yet come near its completely charged state, whereas normal charging is effected by means of only one of the thyristors during the final stage of the charging process or when effecting compensating charging.

The latter, simple embodiment of the invention will be described in detail below with reference to the appended drawings.

Fig. 1 shows a circuit diagram of the electric circuitry of the battery charger;

Fig. 2 shows a voltage diagram illustrating the function of the switching device of the battery charger; and

Fig. 3 shows a diagram illustrating the switching between different current valves during the charging process.

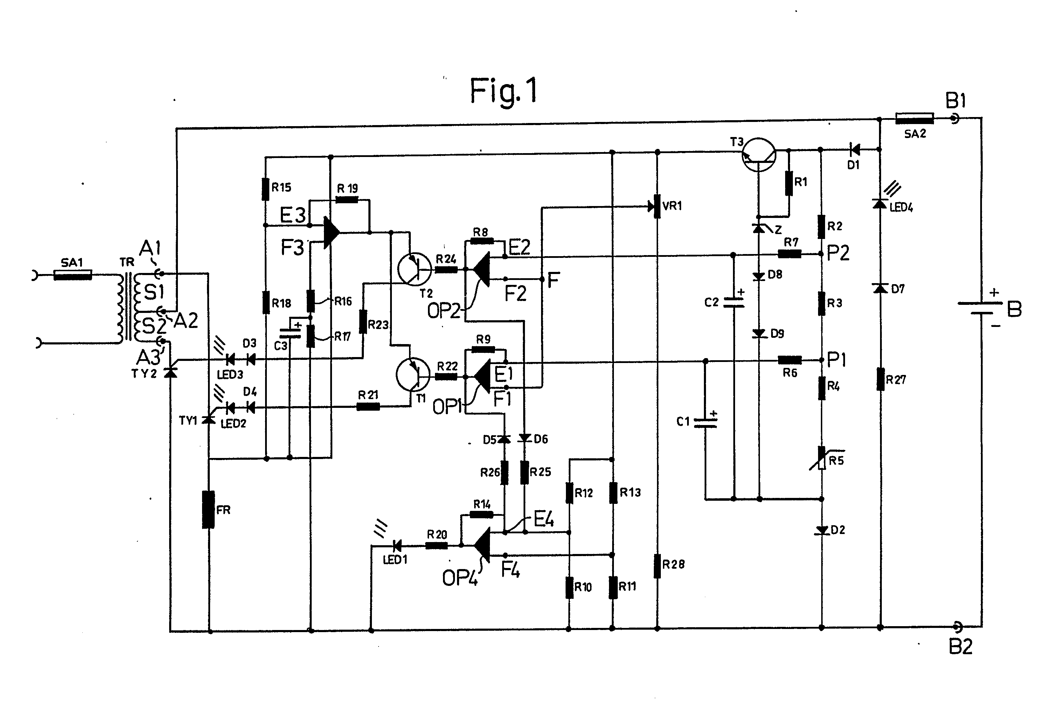

The electrical circuitry of the battery according to the invention shown in Fig. 1 comprises a transformer TR (to the left in the figure) for power supply, which preferably is of a toroid core type and has a fuse SA1 in its primary circuit. In the shown example, the transformer TR is provided with two secondary windings, S1 and S2, each being constituted by one half of the secondary side of the transformer TR and having a common feed terminal A2, which is connected to the positive battery pole terminal B1 (to the right in the figure) of the battery charger via a fuse SA2. The other feed terminals A1 and A3, respectively, of the secondary windings S1 and S2 are each connected to the cathode of a corresponding thyristor TY1 and TY2, respectively, the anodes of which are jointly connected to the negative battery pole terminal B2 of the battery charger. The thyristor TY1 is coupled to the battery pole terminal B2 via a resistor FR (with a low resistance), the function of which will appear below.

The other circuit components in the figure together constitute a control circuit operating in response to the voltage
between the battery pole terminals B1 and B2 for controlling
the conductive state of the thyristors, so as to obtain a
varying charging current to the connected battery B.

Between the terminals B1 and B2, three parallel networks are
connected via the fuse SA2, namely a first network R27, D7,
LED4 for indication of an erroneously connected (with reversed polarity) battery, a second network D1, R2, R3, R4,
R5, D2 for division of the terminal voltage of the connected
battery and a third network D1, R1, T3, Z, D8, D9, D2 for obtaining a feed and reference voltage for the active components
of the control circuit.

The first network consists of a resistor R27, a diode D7 conducting from the minus pole terminal B2 to the plus pole ter-
minal B1, and a light emitting diode LED4. The latter will
light up when a battery is erroneously connected, i.e. with
the plus pole of the battery to the minus pole terminal B2
and with its minus pole to the plus pole terminal B1. In
such a case the diode D1 blocks the feeding of the other networks, and therefore the thyristors TY1 and TY2 are not
turned on and no charging current will flow in the charging
circuits.

The second network is constituted by a voltage divider with
four resistors R2, R3, R4 and R5 connected in series, wherein
the junction P1 between R3 and R4 is connected to the control
input E1 of a first operational amplifier OP1 via a RC-net-
work T6, C1, whereas the junction P2 between R2 and R3 is
connected to the control input E2 of a second operational
amplifier OP2 via a RC-network R7, C2. The resistor R5 is
a thermistor constituting an overheating protection by considerably raising its resistance when heated above a certain temperature, whereby the junctions P1 and P2 are given such a high potential that both the operational amplifiers OP1, OP2 will block the corresponding thyristors TY1 and TY2, respectively.

The third network is constituted by a temperature and voltage stabilized feeding network comprising a transistor T3, the emitter of which feeds the control circuits connected to the control inputs of the thyristors, a resistor R1 connected between the collector and the base of the transistor T3, a Zener-diode Z connected to the base of the transistor T3 and diodes D8 and D9 connected thereto in series. The emitter of the transistor T3 is furthermore connected to two resistors VR1 and R28 connected in series, and a reference voltage is obtained from the potentiometer VR1 and is applied to the reference inputs F1 and F2, respectively, of the two operational amplifiers OP1, OP2 via a common junction F.

Each operational amplifier OP1 and OP2 functions as a Schmitt-trigger and is, at the output, connected to the base of a corresponding transistor T1 and T2, respectively. These transistors are fed with current from an operational amplifier OP3 and are, at the outputs, connected to the control gates of the thyristors TY1, TY2 via a resistor R21 and R23, respectively, a diode D4 and D3, respectively, and a light emitting diode LED2 and LED3, respectively, for indicating that each thyristor is turned on.

Current is fed to the two transistors T1 and T2 provided that the voltage drop over the resistor FR connected in series with the thyristor TY1 does not exceed a predetermined limit value. This resistor FR is constituted by a copper foil loop formed directly onto the printed circuit card by etching and having a very low resistance (approx. $0,01\,\Omega$). The voltage drop over the resistor FR is detected by the inputs of the operational amplifier OP 3, and when the voltage drop exceeds said limit value, the feeding of the transistors T1 and T2 is terminated, whereby both the thyristors TY1 and TY2 are switched off. Thus, the device functions as an overload protection, so that the charging is interrupted should the current exceed a critical value.

The circuitry contains still another operational amplifier OP4, the controlled input E4 of which is connected to the outputs of the operational amplifiers OP1 and OP2 in such a way that the operational amplifier OP4 gives an output signal and lights a light emitting diode LED 1 as the compensating charging of the connected battery is initiated.

The four operational amplifiers OP1, OP2, OP3 and OP4 all receive their drive voltage from the transistor T3, so that a correctly pole-connected battery B is a condition for the control circuit to be actuated and a charging current to flow through one or both of the thyristors TY1, TY2.

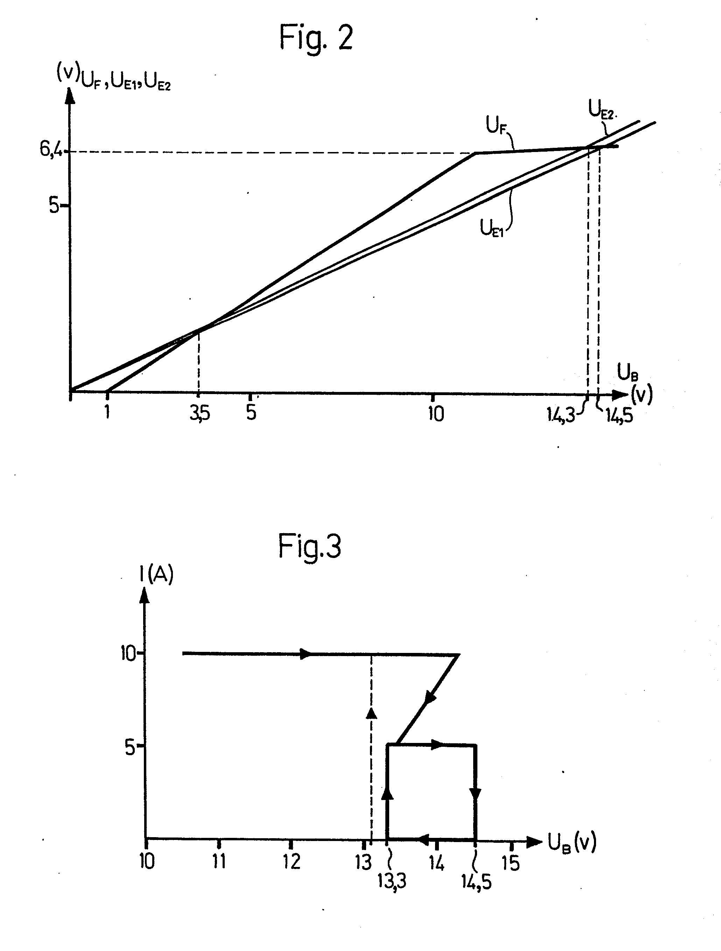

Fig. 2 illustrates how the voltages on the inputs of the operational amplifiers OP1 and OP2 vary with the increasing pole terminal voltage of the connected battery. The operational amplifiers are so adapted that the potential on each output becomes low (and makes the corresponding transistor T1 and T2, respectively, conductive) when the voltage on the control input $U_{E1}$ and $U_{E2}$, respectively, is below the voltage of the reference input $U_F$. This condition is met within a positive voltage interval from approx. 3.5V to 14.3V and 14.5V, respectively. Thus, also for this reason, a battery must be connected to turn on the thyristors TY1 and TY2. Up to a pole terminal voltage of 14.3V, both thyristors TY1 and TY2 are triggered. Then, a current of approx. 5A flows through each thyristor and, should no current be drawn off during charging, a charging current of about 10A is obtained through the battery. When the battery voltage reaches the level of 14.3V, one of the operational amplifiers OP2 ceases to furnish an output signal, and only one of the thyristors TY1 continues to be triggered via the corresponding operational amplifier OP1 and transistor T1. Thus, an automatic switching from a quick charging with approx. 10A to normal charging with approx. 5A takes place, as the battery approaches its completely charged state, substantially in accordance with the ideal charging curve of the battery.

In the final stage, the charging current follows a process in accordance with Fig. 3 illustrating the charging current as a function of the pole terminal voltage of the battery. When the pole terminal voltage 14.3V is reached, and the thyristor TY2 is no longer triggered, the current is reduced to half the value, whereby the pole battery terminal voltage, as a result of chemical processes in the cells of the lead battery, momentarily decreases to approx. 13.5V. Nevertheless, the thyristor TY2 is not triggered again due to the fact that the switching level is lower than 13.5V, namely approx. 13.1V. If an increased current is drawn off after said switching, however, the pole terminal voltage decreases to the latter value, whereupon the charger returns to the quick charging with approx. 10A, as indicated by dotted lines to the left in Fig.3.

After the thyristor TY2 has been switched off and the pole terminal voltage has decreased, the remaining thyristor TY1 continues to deliver a charging current of approx. 5A until the pole terminal voltage has increased to 14.5V, when, in accordance with Figs.2 and 3, also the thyristor TY1 ceases to be triggered by the operational amplifier OP1 and the transistor T1, and the charging current decreases to zero momentarily, and the pole terminal voltage decreases once again. In the final stage of the charging process the current value follows a closed hysteresis curve, as indicated in Fig. 3.

If the battery is connected to a user, a great advantage is obtained by the fact that charging of the battery is effected at high current draws of up to 10A, while gasing can be avoided in the final stage of the charging process. It is also possible to use the battery charger for compensating charging, in which case the lower, closed portion of the charging curve in Fig. 3 is followed.

Several modifications can be made by a person skilled in the art within the scope of the appended claim 1.

C L A I M S

1. Battery charger with feed terminals for feeding from an alternating voltage source, namely a first feed terminal (A2) connected to a positive battery pole terminal (B1) and at least two second feed terminals (A1,A3), each one of which being connected to a transformer winding (S1, S2) and via a thyristor (TY1, TY2) serving as a rectifier and current valve, to a negative battery pole terminal (B2), the control gate of each thyristor being connected to a control circuit (OP1, T1, OP2, T2) inserted between the battery pole terminals for controlling the charging process in response to the pole terminal voltage of a connected battery, c h a r a c t e - r i z e d   i n  that the control circuit is adapted to keep different thyristors (TY1, TY2) conductive or switched off in response to the battery pole terminal voltage, whereby different charging current values are obtained during different stages of the charging process (Fig. 3).

2. Battery charger according to claim 1, c h a r a c t e - r i z e d  in that the control circuit is adapted to change the number of conductive thyristors, when the battery pole terminal voltage passes a thresh-hold value.

3. Battery charger according to claim 2, c h a r a c t e - r i z e d  in that the control circuit is adapted to switch off at least one thyristor when the battery pole terminal voltage reaches said threshold value.

4. Battery charger according to anyone of claims 1-3, c h a r a c t e r i z e d  in that the control circuit comprises a resistor network (R2, R3, R4, R5) inserted between the battery pole terminals (B1, B2) and serving as a voltage divider, wherein different junction points (P1, P2) between adjacent resistors are each connected to a corre- sponding trigger-circuit (OP1, T1 and OP2, T2, respectively) in such a way that each trigger-circuit keeps the corresponding thyristor (TY1, TY2) conductive when the corresponding junction point lies within a certain voltage range (Fig. 2).

5. Battery charger according to claim 4, c h a r a c t e - r i z e d   i n   that a blocking diode (D1) is connected in series with said resistor network and that an erroneous pole connection indication network (R27, D7, LED4) connected in parallel between the battery pole terminals comprises a diode (D7) conducting from the minus to the plus pole terminal° and an indication element (LED4).

6. Battery charger according to claim 4 or 5, c h a r a c - t e r i z e d   i n   that said trigger-circuits are driven by a feeding circuit (T3, R1, Z, D8, D9) actuated by a lowest voltage corresponding to a correctly pole-connected battery and being adapted also to give a reference voltage (via VR1) to the trigger-circuits (OP1, T1 and OP2, respectively).

7. Battery charger according to claim 6, c h a r a c - t e r i z e d   i n   that each trigger-circuit comprises a Schmitt-trigger, e.g. an operational amplifier (OP1, OP2), having a first input (F1, F2) on which said reference voltage is applied and a second input (E1, E2, on which the voltage of the corresponding junction point (P1, P2) in said voltage divider (R2, R4, Re, R5) is applied.

8. Battery charger according to claim 7, c h a r a c - t e r i z e d   i n   that each Schmitt-trigger (OP1, OP2) is connected at its output to a corresponding thyristor gate via a transistor (T1, T2).

11

9. Battery charger according to anyone of claims 6-8, c h a r a c t e r i z e d i n that a resistor (FR) connected in series to one of the thyristors is coupled to said feeding circuit (T3, DP3) in such a way that, when detecting a predetermined voltage over said resistor corresponding to a maximum allowed current through the corresponding thyristor (TY1), at least the corresponding trigger-circuit or preferably all the trigger-circuits are made active.

10. Battery charger according to claim 9, c h a r a c t e r i z e d i n that said resistor is constituted by a foil resistor (FR).

11. Battery charger according to anyone of claims 4-10, c h a r a c t e r i z e d i n that one of the resistors of the resistor network of the voltage divider is constituted by a thermistor (R5) serving as protection against overheating.

12. Battery charger according to anyone of the preceding claims, c h a r a c t e r i z e d i n that the control circuit is adapted to switch off all the thyristors (TY1, TY2) when detecting a battery pole terminal voltage exceeding a predetermined maximum value (Fig. 3).

-----------

# Fig.1

0105850

# Fig. 2

# Fig.3